(19) Europäisches Patentamt
European Patent Office
Office européen des brevets

(11) **EP 4 464 891 A1**

(12) **EUROPEAN PATENT APPLICATION**

(43) Date of publication:
**20.11.2024 Bulletin 2024/47**

(21) Application number: **23173822.0**

(22) Date of filing: **17.05.2023**

(51) International Patent Classification (IPC):
**F03D 17/00** *(2016.01)*

(52) Cooperative Patent Classification (CPC):
**F03D 17/026; F03D 17/006; F03D 17/021;**
F05B 2230/80; F05B 2260/821; F05B 2260/84;
F05B 2270/327; F05B 2270/335

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **NADERHOFF, Thorsten**
**22303 Hamburg (DE)**
• **SANDEL, Klaus**
**24808 Jevenstedt (DE)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **MONITORING THE OPERATION OF A WIND TURBINE**

(57) A method of monitoring an operation of a wind turbine is provided. The wind turbine (100) is an upgraded wind turbine that comprises at least one performance enhancing upgrade (90) that increases the energy production of the wind turbine (100) compared to the wind turbine without the performance enhancing upgrade (90). The method monitors an additional active power output (dP) of the upgraded wind turbine (100) that is caused by the performance enhancing upgrade (90), wherein the monitoring compares an active power output ($P_{meas}$) of the upgraded wind turbine (100) to an estimated active power output ($P_{est}$) of a reference wind turbine that corresponds to the upgraded wind turbine without the at least one performance enhancing upgrade (90).

FIG 2

EP 4 464 891 A1

**Description**

FIELD OF THE INVENTION

The present invention relates to a method of monitoring an operation of a wind turbine, wherein the wind turbine is an upgraded wind turbine that comprises at least one performance-enhancing upgrade. It further relates to a respective monitoring system, to a wind turbine and to a computer program.

BACKGROUND

When operating wind turbines, it is desirable to increase the energy production. It is known to provide wind turbines with performance-enhancing upgrades to increase the electrical power generation. Examples are hardware upgrades, such as modifications of the aerodynamics of the wind turbine blades, or software upgrades that change the way in which the wind turbine is controlled, for example by overrating the wind turbine or by generating power in areas of the operating characteristic in which the wind turbine would normally not generate power. The wind turbine operational range may for example be extended or a curtailment may be removed by a respective performance-enhancing upgrade. A wind turbine comprising such upgrade is referred herein as an upgraded wind turbine.

It is desirable to evaluate the functioning and operation of the wind turbine including such upgrade. In particular, it is desirable to detect if the upgrade results in the desired increase of power production and to evaluate the performance of the respective upgrade. Further, such information may be useful for improving respective upgrades.

SUMMARY

Accordingly, there is a need to mitigate at least some of the drawbacks mentioned above and to provide a way of reliably detecting the effect of such performance-enhancing upgrade on the power production of the wind turbine.

This need is met by the features of the independent claims. The dependent claims describe embodiments of the invention.

According to an aspect, a method of monitoring an operation of a wind turbine is provided, wherein the wind turbine is an upgraded wind turbine that comprises at least one performance-enhancing upgrade that increases the energy production of the wind turbine compared to the wind turbine without the upgrade. In the method, an additional active power output of the upgraded wind turbine that is caused by the performance-enhancing upgrade is monitored. The monitoring compares an active power output of the upgraded wind turbine to an estimated active power output of a reference wind turbine that corresponds to the upgraded wind turbine without the at least one performance-enhancing upgrade. The monitoring comprises obtaining at least two operating parameters (in particular actual or current operating parameters) of the upgraded wind turbine during operation, wherein the at least two operating parameters include at least the active power output of the upgraded wind turbine. From the at least two operating parameters, an estimate of the active power output of the reference wind turbine is derived. The method further includes estimating the additional active power output caused by the performance-enhancing upgrade from the active power output of the upgraded wind turbine and the estimated active power output of the reference wind turbine, for example by taking a difference between the respective parameters.

Since the method makes the estimate of the active electrical power output of the reference wind turbine on the basis of the at least two operating parameters, which are acquired during the actual wind turbine operation, the current operating conditions and the (physical) conditions of the wind turbine are reflected in the estimate. Accordingly, the estimate may be rather precise and may as a result deliver a quite precise estimation of the additional active power output that is achieved by the performance-enhancing upgrade. For example, the current operating parameters that are obtained may depend on current ambient conditions, such as turbulence, yaw misalignment and the like. They may further depend on specific turbine properties, such as a degraded performance due to worn rotor blade surfaces, ice and the like. Deriving the estimate from such operating parameters obtained during operation may thus take such operational states and conditions into account. Significant improvements may thus be achieved compared to, for example, comparing the actual power output of the upgraded wind turbine to the nominal power output of the reference wind turbine without the upgrade in order to determine the performance increase due to the upgrade. Such precise detection of the additional power output may allow an optimization of the performance enhancing upgrade and may thus result in a further increase in energy generation by the wind turbine.

It has been found that by such method, the additional active power output due to the upgrade can be estimated relatively precisely over most of the operational range of the wind turbine, including a partial load range and full load range. Further, such method may account for energy production above the cut-out wind speed of the reference wind turbine. Even further, by using operating parameters obtained during operation, fluctuations in the power output of the wind turbine may be taken into account and may not result in an erroneous estimation of the additional active power output. As an example, for the reference wind turbine without the upgrade, such fluctuations may result in a power output above the nominal power output of the reference wind turbine; a method that evaluates power production above the nominal output power would attribute such power fluctuations to the performance enhancing upgrade, which is incorrect. By obtaining the actual operating parameters during operation, such errors may be avoided and the precision may be increased.

The reference wind turbine may be the same as, in particular identical to, the wind turbine without the upgrade. The method may thus estimate how this wind turbine would produce power without the upgrade, based on operating parameters obtained during operation of the upgraded wind turbine that includes the upgrade. Obtaining the operating parameters may in particular comprise acquiring actual or current operating parameters (in particular respective values or data) during the operation of the upgraded wind turbine. A real-time data acquisition may for example be performed. Deriving the estimate of the active power output and the estimating of the additional active power output may likewise be performed in real-time based on the acquired operating parameters.

In an embodiment, the deriving of the estimate comprises considering dynamic fluctuations of the active power output of the reference wind turbine. Such dynamic fluctuations may for example be due to fluctuations of the operating parameters and may accordingly be considered by considering respective fluctuations of the operating parameters. Dynamic fluctuations may be caused by changes in wind speed. Considering such fluctuations may improve the accuracy of the estimation, in particular compared to a comparison to a fixed limit.

The dynamic fluctuations may for example be considered by deriving dynamic fluctuations of one or more operating parameters of the upgraded wind turbine from the at least two obtained operating parameters. As an example, fluctuations of such operating parameter may be derived by comparing the obtained values of the operating parameter (i.e. current values obtained during operation) to a reference, e.g. a mean value or a set-point, for the respective operating parameter. The dynamic fluctuations of corresponding one or more operating parameters of the reference wind turbine may be estimated so as to correspond (e.g., be the same as, or be equal to) the dynamic fluctuations derived for the upgraded wind turbine. Such method may facilitate the estimation while considering actual fluctuations occurring during operation. It has been found that the fluctuations that occur during real operation of the upgraded wind turbine are a surprisingly good estimate of the fluctuations that would occur without the upgrade, i.e. for the reference wind turbine. Such estimation of the dynamic fluctuations for the reference wind turbine thus delivers quite accurate results.

Preferably, the at least two operating parameters further comprise (besides the active power output) a measured operating parameter measured during operation of the upgraded wind turbine and a set-point for an operating parameter of the upgraded wind turbine, in particular for the same operating parameter. By obtaining both, measured values and a set-point for the same operating parameter, the dynamic behavior and respective fluctuations may efficiently be derived. For example, by measuring a rotational speed of the wind turbine rotor and subtracting a set-point for this rotational speed therefrom, the dynamic fluctuations of the rotational speed can be determined in an accurate and simple manner.

The performance-enhancing upgrade may also be termed performance-enhancing feature; it may refer to a modification made to the wind turbine, e.g. by adding a hardware feature and/or a control feature and/or a parameter optimization, which increases the energy production of the wind turbine. The performance-enhancing upgrade may for example comprise a hardware upgrade and/or a control upgrade (e.g. a software upgrade or parameter upgrade), which increases the energy production of the wind turbine. A software upgrade or parameter upgrade may for example change the control method of the wind turbine such that the power production is increased, e.g. by changing an operating characteristic according to which the wind turbine is controlled. Examples are power boost, in which the wind turbine is overrated in certain operating ranges, a speed boost in which the rotational speed of the wind turbine rotor is increased in predetermined operational ranges, or a soft cut-out (SCO) upgrade, in which the wind turbine continues operation at wind speeds exceeding a cut-out wind speed of the reference wind turbine. A hardware upgrade may for example be an add-on for a rotor blade, such as a lift-enhancing device that is attached to the rotor blade, and the like.

Preferably, the at least one performance-enhancing upgrade comprises at least an upgrade that increases a nominal rotational speed of a wind turbine rotor of the wind turbine and/or an upgrade that increases a nominal torque of a wind turbine rotor of the wind turbine. Such upgrades may essentially overrate the wind turbine and may provide an increased power output. A nominal value refers to a value at which the wind turbine is to be operated in accordance with its specifications (e.g., as prescribed by the manufacturer), which generally poses a limit to the operation of the wind turbine without upgrades. A nominal value may in particular be a rated value of the respective wind turbine.

Additionally or alternatively, the at least one performance-enhancing upgrade may comprise one or a combination of an upgrade that increases the nominal output power of the wind turbine, an upgrade that modifies the power curve of the wind turbine to increase the power output during partial load and/or nominal load operation, an upgrade that extends an operational range of the wind turbine, in particular a wind speed range in which the wind turbine generates electrical power, an upgrade that removes a curtailment of the operation of the wind turbine, such as a sector curtailment (which may occur when performing wind sector management in a wind farm) or a sound curtailment, and/or a hardware upgrade, such as a rotor blade add-on. An exemplary upgrade is for example a power boost feature that increases the power output of the wind turbine by increasing the power limit of the wind turbine under predetermined wind conditions.

Preferably, deriving the estimate is performed so as to consider differences in the active power output of the upgraded wind turbine and the active power output of the reference wind turbine in an operating range below a nominal active power output of the reference wind turbine. In particular, differences in the active power output between the upgraded wind turbine and the reference wind turbine in a partial load operating range of the reference wind turbine may be considered when deriving the estimate. Accordingly, the estimate may be more precise, as it does not only consider additional power production on top of the nominal active power output of the reference wind turbine due to the upgrade, but may also consider changes to the active power output due to the upgrade during partial load operation.

Deriving the estimate may be performed by employing a model of the reference wind turbine and/or of the upgraded wind turbine and estimating the active power output of the reference wind turbine from the model. The model may for example be a mathematical model, a physical model and/or a statistical model. By acquiring the current operating parameters of the upgraded wind turbine, such model may allow a precise estimation of the active power output of the reference wind turbine.

Deriving the estimate may for example comprise back-calculating from the at least two obtained operating parameters one or more corresponding operating parameters of the reference wind turbine. Such back-calculating may be based on a respective model. Using such back-calculating may facilitate deriving a precise estimation of the reference wind turbine's active power output.

For example, the at least two obtained operating parameters may further comprise a rotational speed of a wind turbine rotor of the upgraded wind turbine and/or a torque of the wind turbine rotor of the upgraded wind turbine and/or a wind speed obtained for the upgraded wind turbine. One or a combination of these operating parameters may be used in the estimation. For example, a respective back-calculation may be performed for such one or more obtained operating parameters. Unless otherwise noted, the expression rotational speed refers herein to the rotational speed of the wind turbine rotor of the respective wind turbine (reference wind turbine or upgraded wind turbine).

The operating parameters may be obtained by measuring, receiving and/or deriving the respective operating parameters. Preferably, at least rotor speed and one of torque and wind speed are obtained. For example, the rotor speed may be measured, and the torque may be derived from the obtained active power output and the measured rotor speed. Wind speed may for example be measured, or may be obtained, for example from an estimator of a wind turbine controller or the like. A monitoring system that performs the monitoring may for example receive the respective parameter values via a data connection, e.g. from a controller of the wind turbine, from a wind farm controller or the like.

Deriving of the estimate may further consider one or more nominal operating parameters of the reference wind turbine. Preferably, a nominal rotational speed of the wind turbine rotor of the reference wind turbine and/or a nominal torque of the wind turbine rotor of the reference wind turbine and/or a nominal active power output of the reference wind turbine may be considered for deriving the estimate. The use of such nominal operating parameters may facilitate deriving the additional power generation due to the upgrade and may make the estimation more precise. The method may include obtaining the respective one or more nominal operating parameters, e.g. by retrieving from a memory or receiving via a data connection.

In an embodiment, deriving the estimate may comprise estimating a power coefficient Cp of the reference wind turbine and estimating the active power output of the reference wind turbine based on the estimated power coefficient. The power coefficient generally refers to the ratio of the actual active electric power produced by a wind turbine divided by the total wind power flowing into the turbine blades at a particular wind speed, i.e. flowing through the rotor disk. It has been found that by using such relatively simple physical model, a rather precise estimation of the active power output of the reference wind turbine becomes possible.

Deriving the estimation may limit the estimated active power output of the reference wind turbine to a sum of a nominal power output of the reference wind turbine and dynamic power output fluctuations. A minimum function may be used for such limitation. This may have the benefit of avoiding the overestimation of the additional active power output caused by the upgrade, since the power fluctuations are not automatically counted to this additional power. Using such upper limit for the estimate further avoids the underestimation of this additional power, thus making the estimation of the additional power output more precise.

Estimating the active power output of the reference wind turbine may for example comprise estimating, from a wind speed estimated for the reference wind turbine, a wind power for a rotor disk of a wind turbine rotor of the wind turbine and multiplying the wind power by the estimated power coefficient. The rotor disk may in particular be the area swept by the blades of the wind turbine rotor of the reference wind turbine. Preferably, an estimated power loss is further subtracted. Such power loss, which may e.g. be due to power conversion efficiency within the wind turbine and the like, may be obtained by a calibration. The wind speed for the reference wind turbine may be estimated as described further below; it may not necessarily correspond to a measured wind speed. By such method, the precision of the estimation may further be improved.

As an example, the estimating of the power coefficient of the reference wind turbine may comprise estimating a rotational speed of the wind turbine rotor of the reference wind turbine, obtaining a wind speed for the reference wind turbine, and estimating a tip speed ratio of the reference wind turbine based on the estimated rotational speed and the obtained wind speed. The estimated power coefficient may then be determined from the estimated tip speed ratio. The estimation of the rotational speed of the wind turbine rotor may again be based on a rotational speed obtained for the upgraded wind turbine and a respective back-calculation. To derive the power coefficient from the estimated tip speed ratio, a function $f_{Cp,max}$ that represents the $C_p$-map of the reference wind turbine may for example be used. Such $C_p$-map may provide the relationship between tip speed ratio, $C_p$, and pitch-angle for the particular wind turbine, the pitch angle generally being known (e.g. obtained from a wind turbine controller) and generally corresponding to a maximum aerodynamic efficiency during part load operation.

For example, the at least two operating parameters may comprise a wind speed obtained for the upgraded wind turbine (e.g. an estimated or measured wind speed) and a rotational speed of the wind turbine rotor of the upgraded wind turbine. Estimating the rotational speed may be based on the rotational speed obtained for the upgraded wind turbine. The wind speed for the reference wind turbine may be obtained from the wind speed that has been obtained for the upgraded wind turbine.

The estimated wind speed may be limited to a sum of a nominal wind speed of the reference wind turbine and optionally an estimated wind speed offset, which may for example account for respective conversion losses. The nominal wind speed may be the wind speed at which the reference wind turbine achieves a nominal power output. The estimated wind speed for the reference wind turbine may thus correspond to the wind speed obtained for the upgraded wind turbine limited by the respective sum.

The wind speed obtained for the upgraded wind turbine may be a measured wind speed or may be an estimated wind speed derived by an estimator of the upgraded wind turbine. A measured wind speed may not accurately reflect the wind speed that is experienced by the wind turbine rotor of the upgraded wind turbine, for example if the wind hits the rotor at an angle, e.g. due to yaw angle misalignment, wake effects, and other factors. Further, measured wind speed suffers from large fluctuations. It may accordingly be more precise to estimate the wind speed from the operating parameters of the upgraded wind turbine, which may for example continuously be performed by a wind turbine controller. Such estimate may thus be received by the monitoring from a respective controller. The wind speed may be estimated from the active power output, the rotational speed, and the $C_p$-map of the upgraded wind turbine.

The rotational speed may be provided in different units which are easily converted, such as in revolutions per second (n) or in radians per second ($\omega$).

According to a further embodiment, deriving the estimate may comprise estimating a rotational speed and a torque for a wind turbine rotor of the reference wind turbine and calculating the estimate of the active power output of the reference wind turbine from the estimated rotational speed and the estimated torque. The derivation of the estimate may be facilitated while still achieving a sufficient accuracy of the estimate.

Preferably, one or both of the rotational speed and the torque may consider dynamic fluctuations. For example, the estimate of the rotational speed and/or the torque may be limited by a sum of a nominal value of the speed and/or torque for the reference wind turbine and dynamic fluctuations of the rotational speed and/or torque, respectively. As indicated above, such dynamic fluctuations may be derived from the operational parameters obtained during operation of the upgraded wind turbine. Below such upper limit, the estimated rotational speed and/or torque for the reference wind turbine may be set to correspond to the rotational speed and/or torque, respectively, obtained for the upgraded wind turbine.

In a particular implementation, the obtained at least two operating parameters may comprise an obtained (e.g. measured or derived) torque of the upgraded wind turbine. In a range of the obtained torque between a first value of the obtained torque corresponding to a torque of the reference wind turbine at a nominal rotational speed and a second value of the obtained torque corresponding to a nominal operational torque of the upgraded wind turbine, the estimated torque estimated for the reference wind turbine may be determined by or limited by a (linearly) interpolated torque value that corresponds to the obtained torque multiplied by a (linear) correction factor. In such way, a power increase in a partial load region due to the upgrade may be considered, and the accuracy of the estimate of the additional active power output may further be improved. In particular, such way of estimating the torque for the reference wind turbine and thus the output power of the reference wind turbine may consider an increased efficiency of the rotor that is due to the increase in the rotational speed of the rotor (besides considering the additional power production that is due to the increased rotational speed itself). The correction factor may be determined empirically, in particular by choosing the factor so that the estimate corresponds to the active power output of the reference wind turbine without the upgrade, for example by employing a simulation.

The interpolated torque value may in particular be linearly interpolated between the obtained torque at the first value and the nominal operational torque of the upgraded wind turbine multiplied by the correction factor at the second value. The correction factor may be proportional to a ratio between the nominal output power of the reference wind turbine and the (external) power set-point of the upgraded wind turbine. Linearly interpolating between these two torque values and applying the correction factor may result in a precise estimation. The power set-point of the upgraded wind turbine may in particular correspond to or may be equal to the nominal output power of the upgraded wind turbine at the nominal torque of the upgraded wind turbine.

In an embodiment, the monitoring may comprise monitoring the additional active power output for a period of time and determining from the monitored active power output an energy production of the wind turbine during the period of time which is caused by the performance-enhancing upgrade. A precise estimation of the additionally produced energy may thus be obtained.

The at least two operating parameters may comprise a wind speed obtained for the upgraded wind turbine, and the deriving of the estimate may comprise equating the estimated active power output of the reference wind turbine to a value of zero if the obtained wind speed is above a cut-out wind speed of the reference wind turbine. This may be employed additionally or alternatively to the above-described estimations. By such estimation, an upgrade that allows the wind turbine to produce electrical power at wind speeds above the cut-out wind speed may be considered in the estimation. Below the cut-out wind speed, any of the other estimation methods may be employed. Accordingly, even if multiple upgrades are provided on the wind turbine that have powerincreasing effects for different parts of the operating range, a precise estimation of the additional power production may be achieved.

According to a further aspect, a method of operating a wind turbine is provided, wherein the wind turbine is an upgraded wind turbine that comprises at least one performance-enhancing upgrade that increases the energy production of the wind turbine compared to the wind turbine without the upgrade, and wherein the method includes generating electrical power by the wind turbine and performing during the generating of electrical power a method of monitoring the operation of the wind turbine according to any of the aspects and embodiments described herein to detect an additional active power output of the upgraded wind turbine that results from the performance-enhancing upgrade.

According to a further aspect, a monitoring system configured to monitor a wind turbine is provided, wherein the wind turbine is an upgraded wind turbine that comprises at least one performance-enhancing upgrade that increases the energy production of the wind turbine compared to the wind turbine without the upgrade. The monitoring system is coupled to the upgraded wind turbine to obtain at least two operating parameters of the upgraded wind turbine during operation of the upgraded wind turbine. The monitoring system is configured to perform any of the methods described herein. By means of such monitoring system, advantages similar to the ones outlined further above may be achieved.

According to a further aspect, a wind turbine comprising a respective monitoring system is provided. The monitoring system may be provided within the wind turbine, for example in a nacelle thereof. The monitoring system may for example be integrated with a wind turbine controller, or may be provided separate therefrom.

According to a further aspect, a computer program for monitoring the operation of a wind turbine is provided, wherein the wind turbine is an upgraded wind turbine that comprises at least one performance-enhancing upgrade that is configured to increase the energy production of the wind turbine compared to the wind turbine without the upgrade. The computer program comprises control instructions which, when executed by a processing unit of a monitoring system that monitors the operation of the wind turbine, cause the processing unit to perform any of the methods described herein. Such computer program, in particular the instructions, may be provided on a volatile or non-volatile data carrier or storage device.

Additionally and/or alternatively a further aspect is disclosed, and/or in particular as an embodiment of one of a precedingly described aspect(s) and/or embodiment(s), namely, a method for operating a wind turbine, in particular an offshore wind turbine, further in particular a floating offshore wind turbine, and/or for feeding electrical and/or chemical energy to an electricity and/or chemical grid, the method comprising the following steps:

executing steps of an embodiment or of a combination of embodiments of a method as disclosed supra;

generating, by the wind turbine, electrical power and/or electrical energy, and in particular generating at least partially from the electrical energy, further in particular, by transforming electrical energy into hydrogen by electrolysis, chemical energy in form of a gas or liquid, in particular in the form of hydrogen;

transmitting, at least partially, the electrical power, the electrical energy, and/or the chemical energy to an energy receiving arrangement, in particular wherein the receiving arrangement is not positioned in international waters, is positioned onshore, and/or is positioned within a 12-miles-zone of a respective sovereign national state over which the respective state has jurisdiction; and

supplying, at least partially, the electrical power, the electrical energy, and/or the chemical energy to an electrical and/or chemical utility grid, in particular to an onshore electrical and/or chemical utility grid and/or chemical/electrical storage.

The term "chemical energy" includes means for storing energy in a chemical substance such as in hydrogen. A chemical energy grid could for example be a gas (hydrogen) grid and/or storage device.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

The monitoring system or the wind turbine may in particular be configured to carry out any of the method steps described herein, and the method may be carried out by a monitoring system or wind turbine having any of the configurations described herein. The method may include any of the steps described with respect to other components of the wind turbine, such as the measuring of any operating parameter by a wind turbine controller and the like. The monitoring system may comprise any other components of the wind turbine, such as one or more respective sensors for measuring one or more of the operating parameters disclosed herein or a wind turbine controller that provides such operating parameters; the monitoring system may form part of a respective wind turbine controller.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is schematic drawing showing a wind turbine including a monitoring system according to an embodiment.

Fig. 2 is schematic drawing showing a monitoring system according to an embodiment.

Fig. 3 is a flow diagram illustrating a method according to an embodiment.

Fig. 4 is a flow diagram illustrating a particular implementation of a step of the method of Fig. 3 according to an embodiment.

Fig. 5 is a flow diagram illustrating a further implementation of a step of the method of Fig. 3 according to an embodiment.

Fig. 6 shows schematic diagrams illustrating an additional active power output of an upgraded wind turbine estimated according to the method of Fig. 4.

Fig. 7 shows schematic diagrams illustrating an additional active power output of an upgraded wind turbine estimated according to the method of Fig. 5.

Fig. 8 shows schematic diagrams illustrating different parameters of the estimation of the additional active power output of the upgraded wind turbine when using the method of Fig. 5.

DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

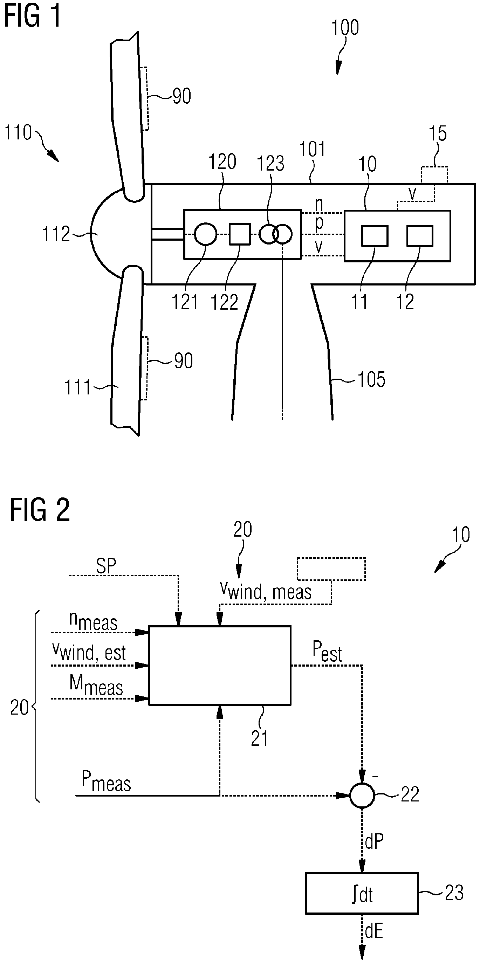

Fig. 1 schematically illustrates a wind turbine 100 that comprises a wind turbine tower 105, on which nacelle 101 is mounted. Wind turbine 100 comprises a rotor 110 including rotor blades 111 and a hub 112. Wind turbine 100 further comprises an electric power generating system 120, which may include a generator 121 coupled to rotor 110, a converter 122, and optionally a transformer 123. Power generating system 120 may have any known configuration, it may for example implement a full converter topology or a doubly-fed induction generator (DFIG) topology. Wind turbine 100 may operate in any known manner and may be an onshore or offshore wind turbine.

Wind turbine 100 includes one or more performance enhancing upgrades 90. In the exemplary implementation of Fig. 1, a performance enhancing upgrade 90 in form of an add-on for rotor blades 111 is illustrated. An example are lift-enhancing flaps, trailing edge add-ons, and the like. Performance-enhancing upgrade 90 may additionally or alternatively include a software upgrade, such as an upgrade that modifies the control of wind turbine 100. Wind turbine 100 may include a wind turbine controller that controls the wind turbine in accordance with an operating characteristic and

EP 4 464 891 A1

with certain operating limits. The performance-enhancing upgrade may modify such characteristic and/or limits. As an example, the upgrade may increase a nominal rotor speed of rotor 110 and/or increase a nominal torque of the wind turbine and/or increase a nominal power output of the wind turbine and/or modify parameters of the operating characteristic to increase the power output during partial load operation and/or nominal load operation, and/or extend an operational range of wind turbine 100. The wind turbine 100 without the upgrade is referred to herein as reference wind turbine. For example, if the reference wind turbine has a nominal power output of about 2 MW, the upgrade may increase the nominal power output to 2.1 MW and thus may overrate the wind turbine (e.g., at the expense of lifetime). The wind turbine may further be controlled with limits in the form of curtailments, such as a sound curtailment (to reduce a sound generation) or a sector curtailment. The performance-enhancing upgrade may comprise the removal of such curtailment. Accordingly, by the one or more performance-enhancing upgrades 90, the output power of wind turbine 100 may be increased. Wind turbine 100 is thus an upgraded wind turbine.

Wind turbine 100 comprises a monitoring system 10 for monitoring the increase in active power output due to the one or more performance-enhancing upgrades 90. Monitoring system 10 obtains two or more operating parameters of upgraded wind turbine 100 during operation. Values for the two or more operating parameters may be acquired in real-time during operation. The operating parameters include at least an active power P that is output by wind turbine 100. They may further include a rotational speed n of wind turbine rotor 110, a wind speed v for the wind turbine 100, and/or a torque M of rotor 110. The operating parameters may be obtained by receiving them, e.g. from a controller of the power generation system 120 as illustrated in Fig. 1, such as from a wind turbine controller, by measuring them, e.g. by a measuring unit 15 (e.g., a sensor) illustrated exemplarily for the wind speed v, or by deriving them. For example, from a measured or received power P and rotational speed n, the torque M may be derived. The active power P may for example be measured by measuring a voltage and current before or behind the transformer 123.

Monitoring system 10 estimates the additional active power output of the wind turbine 100 that is due to the performance-enhancing upgrade 90. Monitoring system 10 may comprise a processing unit 11 and a memory 12 that stores control instructions which, when executed by processing unit 11, perform any of the methods disclosed herein, and may in particular employ any of the disclosed estimating methods for the additional active power output. The processing unit 11 may be any type of processor, such as a microprocessor, an application specific integrated circuit, a digital signal processor or the like. Memory 12 may include volatile and non-volatile memory, in particular RAM, ROM, EEPROM, FLASHmemory, hard disc drives and the like. Monitoring system 10 may further include respective input/output interfaces for receiving signals to obtain the operating parameters and for communicating with sensors and/or external data sources, via which further operating parameters, such as wind speed, may be obtained. Monitoring system 10 may further include a user interface and other communication interfaces, e.g. to provide the result of the monitoring to an operator or to further processing. Monitoring system 10 may also be provided outside the wind turbine 100 and may be coupled to the wind turbine 100 to perform data communication, e.g. to obtain the operating parameters.

Monitoring system 10 may in particular estimate the active power of the reference turbine, i.e. the active power that would be output by the wind turbine 100 without the one or more upgrades 90. For this purpose, monitoring system 10 may employ a model of the reference wind turbine, which may be a mathematical and/or a physical model, or a statistical model, or any combination thereof. The active power output of the reference wind turbine may in particular be calculated by a backward calculation method that employs the current obtained two or more operating parameters of the upgraded wind turbine 100. The obtained operating parameters may be employed by the model to provide the estimation of the active power output of the reference wind turbine.

Fig. 2 illustrates a particular implementation of the monitoring system 10 of Fig. 1. Estimation unit 21 of the monitoring system 10 estimates the active power output $P_{est,ref}$ of the reference wind turbine from the at least two operating parameters 20. These may include measured rotational speed $n_{meas}$, measured wind speed $v_{wind,meas}$, torque $M_{meas}$, and active power output of the upgraded wind turbine $P_{meas}$. As mentioned above, some of these parameters are optional and the parameters may be derived one from the others; only estimated wind speed and no torque measurement may for example be obtained. The obtained operating parameters 20 may further include one or more operating set-points SP, which may for example be obtained from the wind turbine controller, a converter controller, or other control units of wind turbine 100. It should be clear that figure 2 schematically illustrates different possibilities for obtaining operating parameters and set-points. The operating parameters and setpoints that are actually obtained for the estimation will depend on the particular implementation. Exemplary implementations are described in detail below; only the operating parameters and set-points used by the respective estimation may be obtained by estimation unit 21 in the respective example.

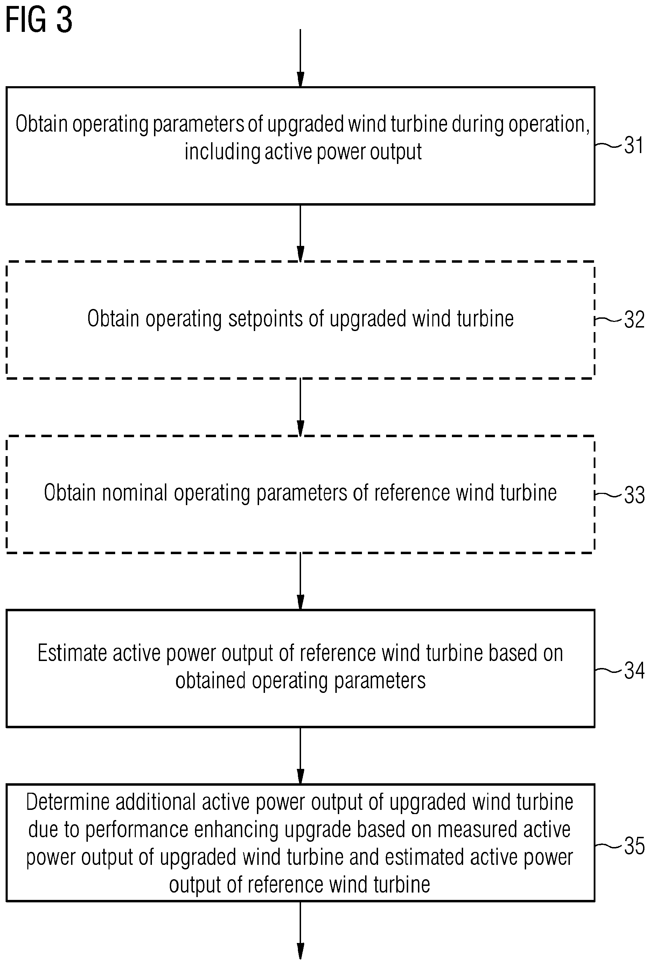

A method that may be performed by the monitoring system 10 is exemplarily illustrated in the flow diagram of Fig. 3. In the first step 31, the operating parameters 20 of the upgraded wind turbine are obtained during operation, including the active power out $P_{meas}$. Parameter values may be acquired, e.g. by measurement, may be received (digitally or as an analog signal), and/or may be derived (essentially) in real-time. Operating set-points SP may optionally be obtained from the upgraded wind turbine in step 32. Further optionally, in step 33, nominal operating parameters of the reference wind turbine may be obtained. These may for example be retrieved from a memory of monitoring unit 10 or of a control system of the wind turbine. Nominal operating parameters will preferably include at least a nominal rotational speed of rotor 110 of the reference wind turbine, and may further include a nominal wind speed for the reference wind turbine, a nominal active power output of the reference wind turbine, a nominal torque of the reference wind turbine and any combination thereof, depending on the estimation method.

In step 34, the estimation unit 21 estimates from the obtained operating parameters and optionally the nominal operating parameters of the reference wind turbine the active power output $P_{est,ref}$ of the reference wind turbine as described in more detail herein below. In step 35, the additional active power output dP of the upgraded wind turbine that is due to the performance-enhancing upgrade is determined on the basis of the measured active power output $P_{meas}$ of the upgraded wind turbine and the estimated active power output $P_{est,ref}$ of the reference wind turbine. In Fig. 2, this may occur at summation node 22 where the estimated active power output $P_{est,ref}$ is subtracted from the measured active power output $P_{meas}$. A precise estimation of the additional active power output dP of the upgraded wind turbine that results from the performance-enhancing upgrade and that depends on the current operating conditions as well as the current state of the wind turbine is thereby obtained. The additional active power output dP may further be integrated or summed for a certain period of time at unit 23 in order to obtain the additional energy production dE of the upgraded wind turbine that results from the performance-enhancing upgrade. Consequently, it becomes possible to evaluate precisely how much additional energy is produced by providing the one or more performance-enhancing upgrades 90 on the wind turbine 100. Unit 23 is optional.

The method of Fig. 3, and accordingly units 21, 22 and 23 of control system 10 may be implemented as control instructions that are stored in memory 12 and that are executed by processing unit 11 of control system 10. Implementations as dedicated digital signal processors or application specific integrated circuits are likewise conceivable.

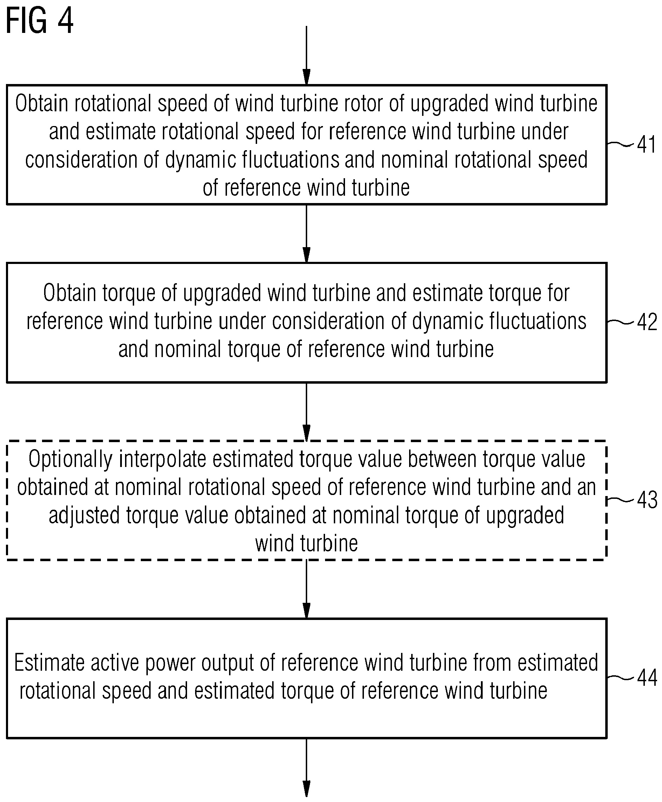

Fig. 4 illustrates a particular implementation of the estimation step 34 of Fig. 3 in which the estimate for the active power output of the reference wind turbine is derived. In step 41, a rotational speed is estimated for the reference wind turbine under consideration of dynamic fluctuations. This may occur by obtaining the rotational speed of the wind turbine rotor of the upgraded wind turbine and further obtaining a set point for the rotational speed for the upgraded wind turbine and subtracting these quantities to obtain the dynamic fluctuations for the upgraded wind turbine. The rotational speed $n_{est}(t)$ of the reference wind turbine may then be set to the minimum of the sum of the nominal rotational speed of the wind turbine and the dynamic fluctuations, and the measured rotational speed. This way, a rotational speed above the sum of the nominal rotational speed of the reference wind turbine and the dynamic fluctuations is attributed to the performance-enhancing upgrade. This may occur in accordance with the following equations:

$$n_{est}(t) = \min\left[n_{meas}(t),\ n_{ref} + n_{dyn}(t)\right] \qquad (\text{Eq. 1})$$

$$n_{dyn}(t) = n_{meas}(t) - n_{set.control}(t) \qquad (\text{Eq. 2})$$

wherein $n_{meas}(t)$ is the measured rotational speed of the upgraded wind turbine; $n_{ref}$ is the nominal rotational speed of the reference wind turbine, $n_{dyn}(t)$ are the dynamic rotational speed fluctuations of the upgraded wind turbine, $n_{set,control}(t)$ is the set point of the rotational speed of the upgraded wind turbine, and 'min' is the minimum function that returns the smaller of the two quantities in the bracket.

In a similar manner, the torque of the reference wind turbine may be estimated in step 42 under consideration of dynamic torque fluctuations, based on the torque fluctuations of the upgraded wind turbine. The estimated torque for the reference wind turbine can in particular be determined by the following equations:

$$M_{est}(t) = \min\left[M_{meas}(t),\ M_{ref} + M_{dyn}(t)\right] \qquad (\text{Eq. 3})$$

$$M_{dyn}(t) = M_{meas}(t) - M_{set.control}(t) \qquad (\text{Eq. 4})$$

wherein

$M_{meas}(t)$ is the measured torque of the upgraded wind turbine;
$M_{ref}$ is the nominal torque of the reference wind turbine,
$M_{dyn}(t)$ are the dynamic torque fluctuations of the upgraded wind turbine, and $M_{set,control}(t)$ is the set point of the torque of the upgraded wind turbine.

Based on the estimated rotational speed and the estimated torque for the reference wind turbine, the active power output of the reference wind turbine can be estimated in step 44 according to the following equation:

$$P_{est}(t) = M_{est}(t)\, n_{est}(t) \qquad (\text{Eq. 5})$$

As can be seen, the estimation limits the rotational speed and the torque to the nominal rotational speed and nominal torque of the reference wind turbine, i.e. to the respective rated values. The dynamic fluctuations of the measured values are essentially transferred to the estimation of the respective quantities for the reference wind turbine. The active power output that is estimated for the reference wind turbine thus rather accurately reflects the power output that would have been achieved without the performance-enhancing upgrade 90.

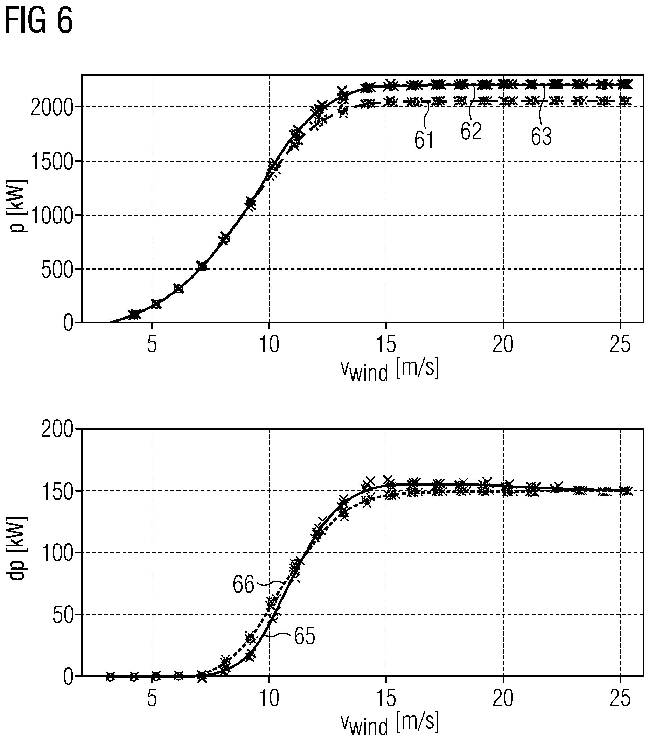

Fig. 6 illustrates diagrams that have been obtained by operating a reference wind turbine and the corresponding upgraded wind turbine under realistic conditions using a simulation with respective wind speed distributions. The upper diagram of Fig. 6 illustrates the active power output P over the wind speed $v_{wind}$, wherein curve 61 illustrates the power output of the reference wind turbine (without the upgrade) and curve 62 illustrates the power output of the upgraded wind turbine. Based on the method of Fig. 4 without the optional step 43, the additional power output due to the upgrade has been estimated and has been added to curve 61, thus resulting in the estimated curve 63 for the total power output of the reference wind turbine plus the additional power output estimated for the upgrade. As can be seen, curve 63 substantially corresponds to curve 62. The lower diagram of Fig. 6 illustrates the additional active power output dP that is due to the performance-enhancing upgrade. Curve 65 illustrates the actual difference between the two simulated curves 61 and 62. Curve 66 shows the estimation in accordance with the method of Fig. 4 based on the current operating parameters of the upgraded wind turbine. As can be seen, the estimate is quite precise and corresponds to the actual additional active power output for most of the wind speeds. Although the estimation explained above is relatively simple, good results are already achieved.

To further improve the estimation, the estimation may be modified by the optional step 43. The reference wind turbine without the upgrade may reach a certain torque at a nominal rotational speed of the reference wind turbine, wherein this characteristic torque is termed $M_{switch}$ herein. Since the performance upgrade may result in higher rotational speeds, the operational states are modified, and the rotor efficiency may further be increased. This is not considered in the above explained method. A more precise estimation may thus be made by interpolating the estimated torque value above this characteristic torque $M_{switch}$ between this torque value and a torque value that is corrected by a linear correction factor, which may be determined empirically. The estimation of the torque of the reference wind turbine may thus be modified to:

$$M_{est}(t) = \min\left[M_{est,lin}(t),\, M_{ref} + M_{dyn}(t)\right] \qquad (\text{Eq. 6})$$

wherein $M_{est,lin}(t)$ is the estimated torque of the reference wind turbine that considers the correction factor. It may for example be determined as follows:

$$M_{est,lin}(t) = \begin{cases} M_{meas}(t) & \text{for } M_{meas} < M_{switch} \\ M_{meas}(t)\max\left[1, \dfrac{n_{set,control}(t)}{n_{ref}}\right] \dfrac{1}{\varepsilon_{torque}(t)} & \text{for } M_{switch} \leq M_{meas} < M_{nom} \\ M_{meas}(t)\max\left[1, \dfrac{n_{set,control}(t)}{n_{ref}}\right] \dfrac{P_{ref}}{P_{set,ext}(t)} & \text{for } M_{meas} = M_{nom} \end{cases}$$

$$(\text{Eq. 7})$$

with the linear correction factor $\varepsilon_{torque}(t)$ for the torque of the reference wind turbine of:

$$\varepsilon_{torque}(t) = \left(\frac{P_{set,ext}(t)}{P_{ref}} - 1\right)\frac{(M_{meas}(t) - M_{switch})}{(M_{nom} - M_{switch})} + 1 \qquad (\text{Eq. 8})$$

wherein $M_{switch}$ is the characteristic torque at which the nominal rotational speed of the reference wind turbine is reached,

$M_{nom}$ is the nominal torque of the upgraded wind turbine, $P_{ref}$ is the nominal active output power of the reference wind turbine, $P_{set,ext}(t)$ is the external power setpoint of the upgraded wind turbine (which may usually be the nominal power), and 'max' is the maximum function that returns the larger of the two quantities.

With this modification to equation 3, a more precise estimate of the active power output of the reference wind turbine may be obtained in accordance with the explanations provided above with respect to equations 1 to 5. The estimated torque for the reference wind turbine is thus limited to the nominal torque of the reference wind turbine (i.e. the maximum rated torque) plus the dynamic fluctuations by equation 6. Below this limit, in the partial load region, the estimated torque corresponds to a back-calculation of the torque with the ratio of the expected rotational speed increase of the rotor wherein a similar power level is assumed. The torque is further scaled with a correction factor linear to the current torque level; the power increase in the partial load region due to the upgrade may thereby be considered. The method corresponds to a linear correction of the estimated active power output of the reference wind turbine to account for the efficiency increase of the wind turbine rotor at the upgraded rotational speed. As can be taken from equation 7, the interpolation for the linear correction occurs between a value of the measured torque that corresponds to $M_{switch}$, and a value for the measured torque that corresponds to $M_{nom}$. Within this range of measured torque values, the estimated torque for the reference wind turbine $M_{est,lin}$ is scaled by the correction factor, the scaled torque being also termed adjusted torque herein. It should be clear that step 43 is optional and may be used to further increase the accuracy.

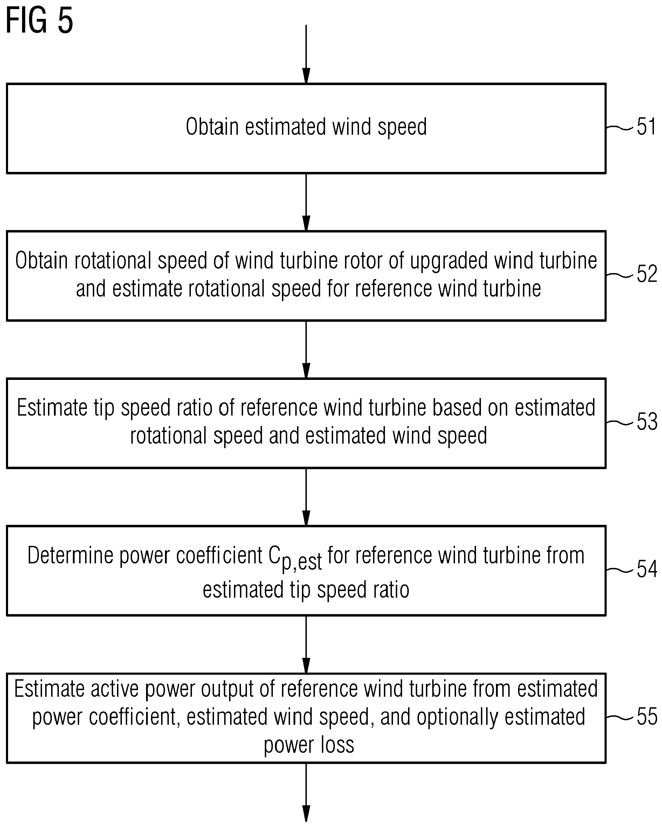

Fig. 5 illustrates a further possible implementation of the estimation of the active power output of the reference wind turbine in step 34 of Fig. 3. In the context of obtaining the operating parameters in step 31, the wind speed and the rotational speed for the reference wind turbine are obtained in steps 51 and 52. In step 51, an estimated wind speed is obtained. This may include the obtaining of an estimated wind speed for the upgraded wind turbine (e.g. from an estimator of the wind turbine controller) and the deriving of an estimated wind speed for the reference wind turbine therefrom, e.g. by limiting the wind speed to a nominal wind speed of the reference wind turbine and/or by switching between different estimators. For example, the estimated wind speed for the reference wind turbine may be obtained according to the following equation:

$$v_{wind,est,lim}(t) =$$

$$\min\left[v_{wind,nom} + \Delta v_{wind,offset}, \max\left[v_{wind,est,control}(t), v_{wind,PAE}(t) - \Delta v_{wind,PAE}\right]\right]$$

$$(\text{Eq. } 9)$$

wherein $v_{wind,nom}$ is the nominal wind speed of the reference wind turbine, $\Delta v_{wind,offset}$ is a wind speed offset for $v_{wind,nom}$, $v_{wind,est,control}$ is an estimated wind speed of the upgraded wind turbine that may be estimated by, e.g., a wind turbine controller based on the current operating parameters, $v_{wind,PAE}$ is an estimated wind speed of the upgraded wind turbine that may be estimated by, e.g., a Power Available Estimator of the upgraded wind turbine (which may provide an improved estimate that employs a more complex $C_p$-map, which considers the pitch angle), and $\Delta v_{wind,PAE}$ is a wind speed offset for $v_{wind,PAE}$.

As can be seen, the estimate by equation 9 is limited by the nominal wind speed of the reference wind turbine. Further, below that, it switches between two different estimators, wherein these estimates are generally available in the wind turbine, e.g. from the respective wind turbine controller. The PAE estimator may for example estimate the wind speed from the power production by the wind turbine and its operational settings, wherein such estimate may be more accurate than a measured wind speed, since it considers the operational state of the wind turbine, such as a yaw misalignment between the wind direction and the wind turbine rotor 110. A higher consistency may thus be achieved, but it is certainly also possible to use measured wind speed values or to employ only the estimated wind speed obtained from a (single) estimator.

In step 52, the rotational speed is estimated for the reference wind turbine, which may occur as described above with respect to equations 1 and 2. From the wind speed estimated for the reference wind turbine in step 51 and the rotational speed estimated for the reference wind turbine in step 52, the tip speed ratio of the reference wind turbine may be estimated in step 53 according to the following equation:

$$\lambda_{est}(t) = \frac{2\pi\, n_{est}(t)\, R}{v_{wind,est,lim}(t)} \qquad (\text{Eq. } 10)$$

wherein $2\pi n_{est}$ is the estimated rotational speed of the reference wind turbine in radians per second, and R is the radius of the wind turbine rotor.

Estimation of the tip speed ratio for the reference wind turbine now allows in step 54 the deriving of an estimated power coefficient for the reference wind turbine according to the equation

$$C_{p,est}(t) = f_{Cp,max}(\lambda_{est}(t))$$ (Eq. 11)

wherein $F_{Cp,max}$ is a function that represents the $C_p$ map of the reference wind turbine. Such map may map a power factor to the tip speed ratio and may be provided for a particular pitch angle of the rotor blades, or may depend on such pitch angle. Such maps are commonly employed in wind turbine control and are for example used to estimate the rotor effective wind speed. The power factor estimated in such way may be used to calculate a power factor estimate for the active power output of the reference wind turbine to:

$$P_{est,Cp}(t) = \frac{1}{2} A_{rotor} \, \rho(t) \, C_{p,est}(t) \, v_{wind,est}(t)^3 - P_{loss}$$ (Eq. 12)

wherein $A_{rotor}$ is the area of the wind turbine rotor, $\rho(t)$ is the density of the air, and $P_{loss}$ is a power loss of the reference wind turbine. The first term corresponds to the wind power through the rotor disc multiplied by the power coefficient, and the second term considers losses that occur during the conversion to electrical power. $P_{loss}$ may again be obtained from simulation or calibrated. It is essentially an equivalent to the wind speed offset mentioned above.

The estimated active power output of the reference wind turbine may be limited by the sum of the nominal active power output $P_{ref}$ of the reference wind turbine and the dynamic fluctuations of the active power output, which may again be derived from the dynamic power output fluctuations of the upgraded wind turbine that can be measured, as explained above with respect to rotational speed and torque:

$$P_{ref,dyn}(t) = P_{meas}(t) - P_{set,control}(t) + P_{ref}$$ (Eq. 13)

wherein $P_{set,control}(t)$ is the power setpoint of the upgraded wind turbine, which may be received or determined by multiplying the setpoint values of the torque and rotational speed setpoints of the upgraded wind turbine:

$$P_{set,control}(t) = M_{set,control}(t) \, n_{set}(t).$$ (Eq. 14)

The first term (i.e. the difference) of equation 12 thus again represents the dynamic fluctuations. In step 55, the final estimated power output of the reference wind turbine may now be determined to:

$$P_{est}(t) = \min\left[P_{ref,dyn}(t), P_{est,Cp}(t)\right]$$ (Eq. 15)

Such estimation method thus considers a physical model of the wind turbine rotor and the conversion of the wind energy passing through the rotor disk into electrical energy. An intuitive and rather precise estimation of the active power output of the reference wind turbine may thus be achieved in step 55 of the method of Fig. 5.

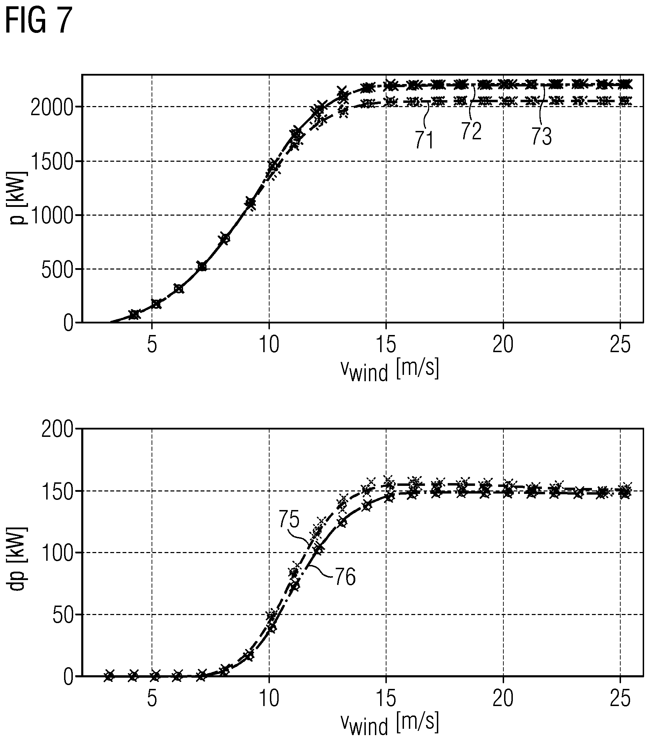

Similar to Fig. 6, Fig. 7 illustrates diagrams that have been obtained when applying the method of Fig. 5. In the upper diagram, curve 71 illustrates the simulated power output of the reference wind turbine, and curve 72 shows the power output of the upgraded wind turbine. Curve 73 corresponds to the sum of the power output of the reference wind turbine and the estimated additional active power output due to the upgrade. As can be seen, it almost coincides with curve 72. In the lower diagram of Fig. 7, curve 75 illustrates the actual difference between the power output of the reference wind turbine and the upgraded wind turbine (i.e., a difference between curves 71 and 72). Curve 76 illustrates the estimated additional active power output caused by the upgrade, as estimated in accordance with the method of Fig. 5. Again, only minor differences exist between the actual increase in active power output due to the upgrade and the estimate.

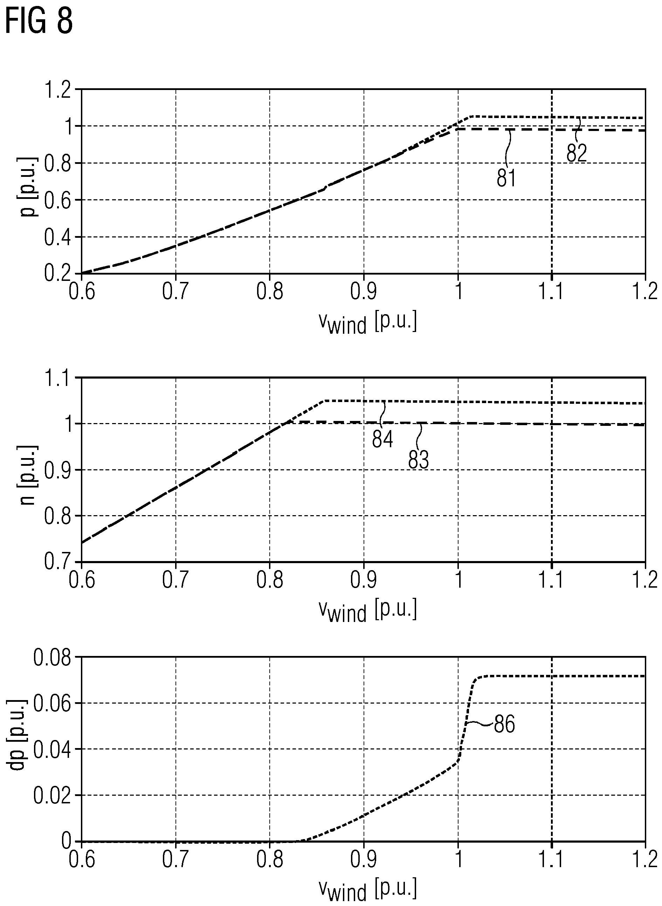

Fig. 8 shows further diagrams that illustrate the estimation explained with respect to Fig. 5. In the upper diagram, curve 82 shows an actually measured active power output P of the upgraded wind turbine. Curve 81 shows the active power output of the reference wind turbine as estimated in accordance with the method of Fig. 5. As can be seen, the estimation not only considers differences above the nominal wind speed, but also during partial load operation.

The middle diagram of Fig. 8 shows the rotational speed of the rotor, wherein curve 84 illustrates the actually measured rotational speed of the upgraded wind turbine, and curve 83 shows the estimated rotational speed for the reference wind turbine. As can be seen, the upgrade provides for an increased rotational speed of the upgraded wind turbine, whereas the rotational speed of the reference wind turbine is limited to the nominal value (1 p.u.). The lower diagram of Fig. 8 finally shows the estimated additional active output power that is due to the upgrade, i.e. the additional power produced by the upgraded wind turbine that can be attributed to the upgrade. Curve 86 shows that the estimation method considers the increase in power output over most of the operational range, and in particular also during partial load operation. Since in the present example, the upgrade allows an increase of the rotational speed and torque beyond the nominal rotational speed and nominal torque of the reference wind turbine, a particularly high increase in additional power production is seen at higher wind speeds.

It should be clear that the above provides only exemplary implementations of the general teachings disclosed herein. The different methods may be combined and/or may be further refined, and other types of models may be employed for the estimation. Also, the model and/or the estimation may be adapted in accordance with the upgrade provided on the wind turbine.

For example, the reference wind turbine may conventionally stop operation above a certain wind speed, generally termed "cut-out wind speed". The upgrade may allow continued operation at higher wind speeds, however with a lower power output (e.g., soft cut-out, SCO, operation). In such case, below the cut-out wind speed, any of the methods described above may be used for estimating the active power output of the reference wind turbine, or, if no further upgrades are provided, the power output of the reference wind turbine may be set to the active power output measured for the upgraded wind turbine. If the obtained wind speed is above the cut-out wind speed, the estimated power output for the reference wind turbine may be set to zero (as without the upgrade, the reference wind turbine would not have produced any power in this wind speed range). Again, by taking the difference (summation node 22) between such estimated active power output for the reference wind turbine and the actually measured power output from the upgraded wind turbine, an accurate estimate of the additional power produced due to the upgrade can be obtained.

It should be clear that similar adaptations may be performed for other types of wind turbine upgrades, and that the methods and systems disclosed herein are not limited to any particular type of upgrade and any particular estimation method.

While specific embodiments are disclosed herein, various changes and modifications can be made without departing from the scope of the invention. The present embodiments are to be considered in all respects as illustrative and nonrestrictive, and all changes coming within the meaning and equivalency range of the appended claims are intended to be embraced therein.

**Claims**

1.   A method of monitoring an operation of a wind turbine, wherein the wind turbine (100) is an upgraded wind turbine that comprises at least one performance enhancing upgrade (90) that increases the energy production of the wind turbine (100) compared to the wind turbine without the performance enhancing upgrade (90),

     wherein the method monitors an additional active power output (dP) of the upgraded wind turbine (100) that is caused by the performance enhancing upgrade (90),
     wherein the monitoring compares an active power output ($P_{meas}$) of the upgraded wind turbine (100) to an estimated active power output ($P_{est}$) of a reference wind turbine that corresponds to the upgraded wind turbine without the at least one performance enhancing upgrade (90), and
     wherein the monitoring comprises:

          obtaining at least two operating parameters (20) of the upgraded wind turbine (100) during operation, wherein the at least two operating parameters (20) include at least the active power output ($P_{meas}$) of the upgraded wind turbine (100);
          deriving, from the at least two operating parameters (20), an estimate of the active power output ($P_{est}$) of the reference wind turbine; and
          estimating the additional active power output (dP) caused by the performance enhancing upgrade (90) from the active power output ($P_{meas}$) of the upgraded wind turbine (100) and the estimated active power output ($P_{est}$) of the reference wind turbine.

2.   The method according to claim 1, wherein the deriving of the estimate comprises considering dynamic fluctuations of the active output power ($P_{est}$) of the reference wind turbine.

3.   The method according to claim 2, wherein the dynamic fluctuations are considered by deriving dynamic fluctuations of one or more operating parameters of the upgraded wind turbine (100) from at least one of the obtained operating parameters (20) and by estimating the dynamic fluctuations of corresponding one or more operating parameters of the reference wind turbine to correspond to the dynamic fluctuations derived for the upgraded wind turbine (100).

4.  The method according to any of the preceding claims,
    wherein the at least one performance enhancing upgrade (90) comprises at least an upgrade that increases a nominal rotational speed of a wind turbine rotor (110) of the wind turbine and/or an upgrade that increases a nominal torque of a wind turbine rotor (110) of the wind turbine.

5.  The method according to any of the preceding claims,
    wherein deriving the estimate is performed to consider differences in the active power output ($P_{meas}$) of the upgraded wind turbine (100) and the active power output of the reference wind turbine in an operating range below a nominal active power output ($P_{ref}$) of the reference wind turbine.

6.  The method according to any of the preceding claims,

    wherein deriving the estimate is performed by employing a model of the reference wind turbine and/or the upgraded wind turbine (100) and estimating the active power output ($P_{est}$) of the reference wind turbine from the model,
    wherein the model is preferably a mathematical model, a physical model and/or a statistical model.

7.  The method according to any of the preceding claims,
    wherein deriving the estimate comprises back-calculating from the at least two obtained operating parameters (20) one or more corresponding operating parameters of the reference wind turbine.

8.  The method according to any of the preceding claims,
    wherein the at least two obtained operating parameters (20) further comprise a rotational speed ($n_{meas}$) of a wind turbine rotor (110) of the upgraded wind turbine (100) and/or a torque ($M_{meas}$) of the wind turbine rotor (110) of the upgraded wind turbine (100) and/or a wind speed ($v_{wind,meas}$, $v_{wind,PAE}$) obtained for the upgraded wind turbine (100) .

9.  The method according to any of the preceding claims,

    wherein deriving said estimate comprises estimating a power coefficient ($C_{p,est}$) of the reference wind turbine and estimating the active power output ($P_{est}$) of the reference wind turbine based on the estimated power coefficient, and in particular
    wherein estimating the power coefficient ($C_{p,est}$) of the reference wind turbine comprises estimating a rotational speed ($n_{est}$) of the wind turbine rotor (110) of the reference wind turbine, obtaining a wind speed ($v_{wind,est,lim}$) for the reference wind turbine, and estimating a tip speed ratio ($\lambda_{est}$) of the reference wind turbine based on the estimated rotational speed ($n_{est}$) and the obtained wind speed ($v_{wind,est,lim}$), wherein the estimated power coefficient is determined from the estimated tip speed ratio ($\lambda_{est}$).

10. The method according to any of the preceding claims,
    wherein deriving the estimate comprises estimating a rotational speed ($n_{est}$) and a torque ($M_{est}$) for a wind turbine rotor (110) of the reference wind turbine and calculating the estimate of the active power output ($P_{est}$) of the reference wind turbine from the estimated rotational speed ($n_{est}$) and the estimated torque ($M_{est}$).

11. The method according to claim 10, wherein the at least two obtained operating parameters comprise an obtained torque ($M_{meas}$) of the upgraded wind turbine (100),
    wherein in a range of the obtained torque ($M_{meas}$) between a first value of the obtained torque ($M_{meas}$) corresponding to a torque ($M_{switch}$) of the reference wind turbine at a nominal rotational speed ($n_{ref}$) and a second value of the obtained torque ($M_{meas}$) corresponding to a nominal operational torque ($M_{nom}$) of the upgraded wind turbine (100), the estimated torque ($M_{est}$) estimated for the reference wind turbine is determined by or limited by an interpolated torque value ($M_{est,lin}$) that corresponds to the obtained torque ($M_{meas}$) multiplied by a correction factor ($1/\varepsilon_{torque}$).

12. A method for operating a wind turbine (100), in particular an offshore wind turbine, further in particular a floating offshore wind turbine, and/or for feeding electrical energy to an electricity grid, the method comprising the following steps:

executing steps of an embodiment or of a combination of embodiments of a method according to one of the preceding claims;

generating, by the wind turbine (100), electrical power and/or electrical energy;

transmitting at least a part of the electrical power and/or of the electrical energy to an electrical receiving arrangement, in particular wherein the electrical receiving arrangement is not positioned in international waters, is positioned onshore, and/or is positioned within a 12-miles-zone of a respective sovereign national state over which the respective state has jurisdiction; and

supplying at least a part of the electrical power and/or of the electrical energy to an electrical utility grid, in particular to an onshore electrical utility grid.

13. A monitoring system configured to monitor a wind turbine, wherein the wind turbine is an upgraded wind turbine (100) that comprises at least one performance enhancing upgrade (90) that is configured to increase the energy production of the wind turbine compared to the wind turbine without the performance enhancing upgrade (90), wherein the monitoring system (10) is coupled to the upgraded wind turbine (100) to obtain at least two operating parameters (20) of the upgraded wind turbine (100) during operation of the upgraded wind turbine (100), wherein the monitoring system (10) is configured to perform the method according to any one of the preceding claims.

14. A wind turbine (100), comprising the monitoring system (10) of claim 13.

15. A computer program for monitoring the operation of a wind turbine (100), wherein the wind turbine is an upgraded wind turbine that comprises at least one performance enhancing upgrade that increases the energy production of the wind turbine compared to the wind turbine without the performance enhancing upgrade, wherein the computer program comprises control instructions which, when executed by a processing unit (11) of a monitoring system (10) that monitors the operation of the wind turbine (100), cause the processing unit (11) to perform the method of any one of claims 1 to 13.

FIG 1

FIG 2

# FIG 3

Obtain operating parameters of upgraded wind turbine during operation, including active power output ~31

Obtain operating setpoints of upgraded wind turbine ~32

Obtain nominal operating parameters of reference wind turbine ~33

Estimate active power output of reference wind turbine based on obtained operating parameters ~34

Determine additional active power output of upgraded wind turbine due to performance enhancing upgrade based on measured active power output of upgraded wind turbine and estimated active power output of reference wind turbine ~35

# FIG 4

Obtain rotational speed of wind turbine rotor of upgraded wind turbine and estimate rotational speed for reference wind turbine under consideration of dynamic fluctuations and nominal rotational speed of reference wind turbine ~41

Obtain torque of upgraded wind turbine and estimate torque for reference wind turbine under consideration of dynamic fluctuations and nominal torque of reference wind turbine ~42

Optionally interpolate estimated torque value between torque value obtained at nominal rotational speed of reference wind turbine and an adjusted torque value obtained at nominal torque of upgraded wind turbine ~43

Estimate active power output of reference wind turbine from estimated rotational speed and estimated torque of reference wind turbine ~44

# FIG 5

| Obtain estimated wind speed | ~51 |

| Obtain rotational speed of wind turbine rotor of upgraded wind turbine and estimate rotational speed for reference wind turbine | ~52 |

| Estimate tip speed ratio of reference wind turbine based on estimated rotational speed and estimated wind speed | ~53 |

| Determine power coefficient $C_{p,est}$ for reference wind turbine from estimated tip speed ratio | ~54 |

| Estimate active power output of reference wind turbine from estimated power coefficient, estimated wind speed, and optionally estimated power loss | ~55 |

# FIG 6

FIG 7

# FIG 8

Europäisches
Patentamt

European
Patent Office

Office européen
des brevets

# EUROPEAN SEARCH REPORT

**Application Number**

EP 23 17 3822

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 912 807 A (HUANENG CLEAN ENERGY RES INST ET AL.) 16 August 2022 (2022-08-16) <br> * page 1, lines 5-7 * <br> * page 3, lines 4-14 * <br> * page 3, line 45 - page 4, line 4 * <br> * page 5, line 44 - page 6, line 9 * <br> * page 9, lines 4-15 * <br> ----- | 1,6,8, 12-15 | INV. <br> F03D17/00 |
| A | US 2016/298607 A1 (GREGG PETER ALAN [US] ET AL) 13 October 2016 (2016-10-13) <br> * paragraphs [0002], [0024], [0067] * <br> ----- | 1,13-15 | |
| A | US 2016/084233 A1 (EVANS SCOTT CHARLES [US] ET AL) 24 March 2016 (2016-03-24) <br> * paragraphs [0002], [0036], [0045] * <br> ----- | 1,13-15 | |
| A | CN 111 164 304 A (VESTAS WIND SYS AS) 15 May 2020 (2020-05-15) <br> * the whole document * <br> ----- | 1,13-15 | |

| TECHNICAL FIELDS SEARCHED (IPC) |
|---|
| F03D |

The present search report has been drawn up for all claims

| Place of search | Date of completion of the search | Examiner |
|---|---|---|
| The Hague | 3 November 2023 | Pasquet, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 3822

03-11-2023

| Patent document cited in search report | | Publication date | Patent family member(s) | | Publication date |
|---|---|---|---|---|---|
| CN 114912807 | A | 16-08-2022 | NONE | | |
| US 2016298607 | A1 | 13-10-2016 | BR 112016011109 | A2 | 08-08-2017 |
| | | | DK 3077668 | T3 | 26-10-2020 |
| | | | EP 3077668 | A1 | 12-10-2016 |
| | | | ES 2826173 | T3 | 17-05-2021 |
| | | | US 2016298607 | A1 | 13-10-2016 |
| | | | WO 2015077337 | A1 | 28-05-2015 |
| US 2016084233 | A1 | 24-03-2016 | US 2016084233 | A1 | 24-03-2016 |
| | | | WO 2016048876 | A1 | 31-03-2016 |
| CN 111164304 | A | 15-05-2020 | CN 111164304 | A | 15-05-2020 |
| | | | EP 3688305 | A1 | 05-08-2020 |
| | | | US 2020293300 | A1 | 17-09-2020 |
| | | | WO 2019063050 | A1 | 04-04-2019 |

EPO FORM P0459